# EUROPÄISCHE PATENTANMELDUNG

(11) **EP 0 575 722 A2**
(43) Veröffentlichungstag der Anmeldung: **29.12.1993**
(21) Anmeldenummer: 93106413.3
(22) Anmeldetag: 21.04.1993
(51) Int. Cl.: B32B 29/00, B32B 27/04, B44C 5/04

(54) **Dekorative Hochdruck-Schichtpressstoffplatte**

(30) Priorität: 23.06.1992 DE 4220507
(71) Anmelder: RESOPAL GMBH, D-64823 Gross-Umstadt (DE)
(72) Erfinder: Schikarski, Horst J., W-6940 Weinheim (DE); von Kèler, Hans, W-6052 Mühlheim (DE)
(74) Vertreter: Katscher, Helmut, Dipl.-Ing.

(57) **Zusammenfassung**

Eine dekorative Hochdruck-Schichtpreßstoffplatte, die insbesondere für die Verwendung als Fußbodenbelag vorgesehen ist, weist einen Kern (1) aus mehreren Lagen von phenolharzgetränkten Kernpapieren (2) auf. Der Kern trägt eine dekorative Deckschicht (3) aus melaminharzgetränktem Dekorpapier (4) das über die gesamte Papierdicke durchgehende Farbzonen (5) aufweist. Die Farbzonen (5) sind von der übrigen Papiermasse des Dekorpapiers (4) farblich abgesetzt und bilden das Farbmuster des Dekorpapiers (4). Dieses Farbmuster bleibt auch dann noch erhalten, wenn ein Verschleiß bis in die Deckschicht (3) hinein fortgeschritten ist.

## Beschreibung

Die Erfindung betrifft eine dekorative Hochdruck-Schichtpreßstoffplatte mit einer dekorativen Deckschicht aus mindestens einem melaminharzgetränkten, farblich gemusterten Dekorpapier und mit einem Kern aus mehreren Lagen von phenolharzgetränkten Kernpapieren.

Dekorative Hochdruck-Schichtpreßstoffplatten dieses grundsätzlichen Aufbaus sind in unterschiedlichen Ausführungsformen für zahlreiche Verwendungszwecke bekannt (Europäische Norm EN 438). Das farbliche Muster, das das dekorative Aussehen der Deckschicht bestimmt, ist als dünne, farblich gemusterte Schicht an der Oberseite des einfarbigen Dekorpapiers ausgebildet (DE-A-38 40 877).

Da ein Verschleiß dieser dünnen, farblich gemusterten Schicht das dekorative Erscheinungsbild der Schichtpreßstoffplatte stark beeinträchtigen würde, ist es bekannt, die dekorative Deckschicht an ihrer Außenseite mit einer hochabriebfesten, durchscheinenden Overlayschicht zu versehen (DE-A- 36 30 315). Die Lebensdauer derartiger dekorativer Hochdruck-Schichtpreßstoffplatten wird daher im wesentlichen durch den Abriebwiderstand dieser Overlayschicht bestimmt. Sobald die Overlayschicht an einzelnen Stellen infolge von Verschleiß durchbrochen ist, verschwindet an diesen Stellen sehr rasch das dekorative Muster.

Es ist bekannt (Zeitschrift "Bau- und Möbelschreiner", 1984, Heft 11, S. 72), eine Schichtstoffplatte ausschließlich aus durchgefärbten einfarbigen Dekorpapieren aufzubauen. Damit wird aber kein Farbmuster erreicht, so daß sich das Problem auch nicht stellt, das Farbmuster trotz erheblichem Verschleiß noch zu erhalten.

Bei einer als Fußbodenbelag vorgesehenen bekannten dekorativen Hochdruck-Schichtpreßstoffplatte (EP-A-0 355 829) sind zur Bildung der dekorativen Deckschicht mehrere, an ihrer Oberfläche farblich gemusterte Dekorpapiere vorgesehen, deren Muster deckungsgleich ausgeführt sein sollen. Da auch hierbei das Farbmuster nur an einer dünnen oberen Schicht jedes Dekorpapiers ausgeführt ist, tritt ein rascher Verschleiß ein, dessen optische Auswirkung nur dadurch etwas gemildert wird, daß das entsprechende Farbmuster aus dem darunterliegenden Dekorpapier durchscheint. Dieses Durchscheinen weicht jedoch in seiner optischen Wirkung von einem unmittelbar an der Oberfläche liegenden Farbmuster erkennbar ab. Außerdem stellt der notwendigerweise mehrschichtige Aufbau der dekorativen Deckschicht einen erhöhten Herstellungsaufwand dar, der nicht für alle Anwendungsbereiche angemessen ist.

Aufgabe der Erfindung ist es daher, eine Hochdruck-Schichtpreßstoffplatte der eingangs genannten Gattung zu schaffen, bei der sichergestellt ist, daß das ursprüngliche Farbmuster auch dann noch erhalten bleibt, wenn der Verschleiß bis in die dekorative Deckschicht hinein fortgeschritten ist.

Diese Aufgabe wird erfindungsgemäß dadurch gelöst, daß das Dekorpapier über die gesamte Papierdicke durchgehende, von der übrigen Papiermasse des Dekorpapiers farblich abgesetzte Farbzonen aufweist, die das Farbmuster des Dekorpapiers bilden.

Da sich das Farbmuster durch die gesamte dekorative Deckschicht hindurch erstreckt, tritt auch bei stark fortgeschrittenem Verschleiß keine Beeinträchtigung des dekorativen Erscheinungsbildes auf. Das Farbmuster verschwindet erst an denjenigen Stellen, an denen die dekorative Deckschicht durch den Verschleiß völlig abgetragen wurde, so daß der Kern freiliegt.

Die erfindungsgemäße Hochdruck-Schichtpreßstoffplatte ist deshalb insbesondere als Fußbodenbelag geeignet, jedoch auch für alle anderen Anwendungszwecke, in denen mit einem starken mechanischen Verschleiß zu rechnen ist.

Es besteht keine Notwendigkeit, in allen Fällen eine hochabriebfeste Overlayschicht vorzusehen. Jedoch ist es zweckmäßig, eine solche hochabriebfeste Overlayschicht an der Außenseite der dekorativen Deckschicht vorzusehen, um den Verschleißwiderstand zu erhöhen.

Anstelle einer einschichtigen Ausführung der dekorativen Deckschicht kann in Weiterbildung des Erfindungsgedankens auch vorgesehen sein, die dekorative Deckschicht aus mehreren Lagen von Dekorpapier mit jeweils durchgehenden Farbzonen auszuführen.

Weitere vorteilhafte Ausgestaltungen des Erfindungsgedankens sind Gegenstand weiterer abhängiger Ansprüche.

Ausführungsbeispiele der Erfindung werden nachfolgend anhand der Zeichnung erläutert. Es zeigt:
Fig. 1 einen Schnitt durch eine dekorative Hochdruck-Schichtpreßstoffplatte und
Fig. 2-4 abgewandelte Ausführungsformen der Hochdruck-Schichtpreßstoffplatte.

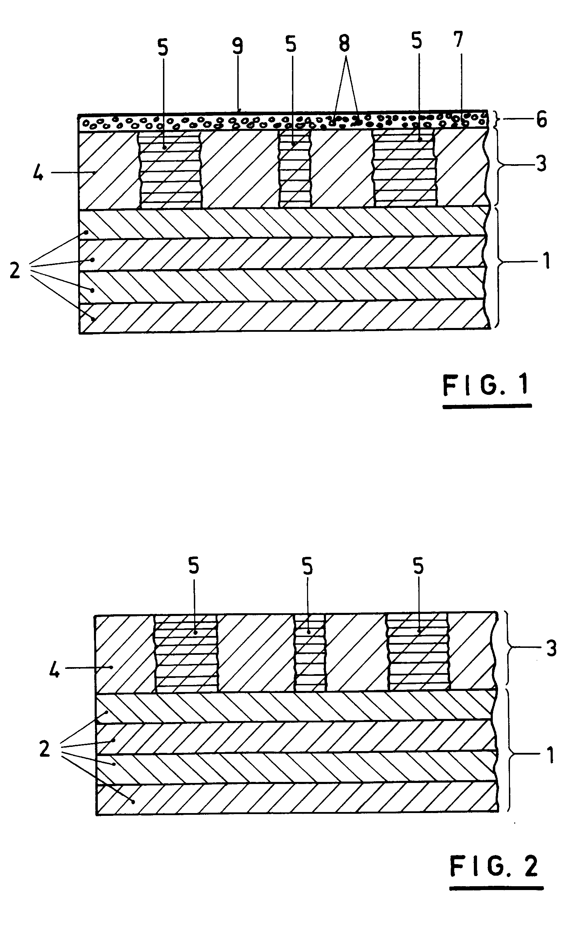

Die in Fig. 1 dargestellte Hochdruck-Schichtpreßstoffplatte dient beispielsweise als Bodenbelag für Fußböden. Sie weist einen Kern 1 aus mehreren Lagen von phenolharzgetränkten Kernpapieren 2 auf. Der Kern 1 trägt eine dekorative Deckschicht 3, die bei dem Ausführungsbeispiel nach Fig. 1 aus einem einzigen melaminharzgetränkten, farblich gemusterten Dekorpapier 4 besteht.

Das Dekorpapier 4 besteht in seiner Grundmasse aus Zellulose, Füllstoffen und ggf. Pigmenten. Es weist über die gesamte Papierdicke durchgehende Farbzonen 5 auf, die von der übrigen Papiermasse des Dekorpapiers 4 farblich abgesetzt sind, indem dort andere oder zusätzliche Pigmente eingebracht sind. Diese farblich abgesetzten Farbzonen 5 bilden das Farbmuster des Dekorpapiers 4 und bestimmen damit das farbliche Dekor der Hochdruck-Schichtpreßstoffplatte.

An ihrer Außenseite trägt die dekorative Deckschicht 3 eine hochabriebfeste Overlayschicht 6, die aus einem durchscheinenden, melaminharzgetränkten Papier 7 besteht und in der abriebverzögernde Zusätze 8 beispielsweise Korundpartikel eingelagert sein können.

Bei der in Fig. 1 dargestellten Ausführungsform ist an der Oberfläche der Overlayschicht 6 beispielsweise noch eine äußere Haftschicht 9 aus Polyvinylbutyral aufgebracht. Diese Haftschicht 9 macht die Oberfläche der Schichtpreßstoffplatte lackierfähig.

Die in der dekorativen Deckschicht 3 enthaltenen, durchgehenden Farbzonen 5 bilden das dekorative Farbmuster der Schichtfeststoffplatte ähnlich einem Druckbild.

Alle Papierlagen sind mit härtbaren Harzen getränkt und bei hoher Temperatur und hohem Druck verpreßt.

Die in Fig. 2 gezeigte Ausführungsform einer dekorativen Hochdruck-Schichtpreßstoffplatte unterscheidet sich von dem Ausführungsbeispiel nach Fig. 1 nur dadurch, daß keine Overlayschicht 6 vorgesehen ist. Die dekorative Deckschicht 3 bildet hierbei die oberste Lage des Schichtaufbaus.

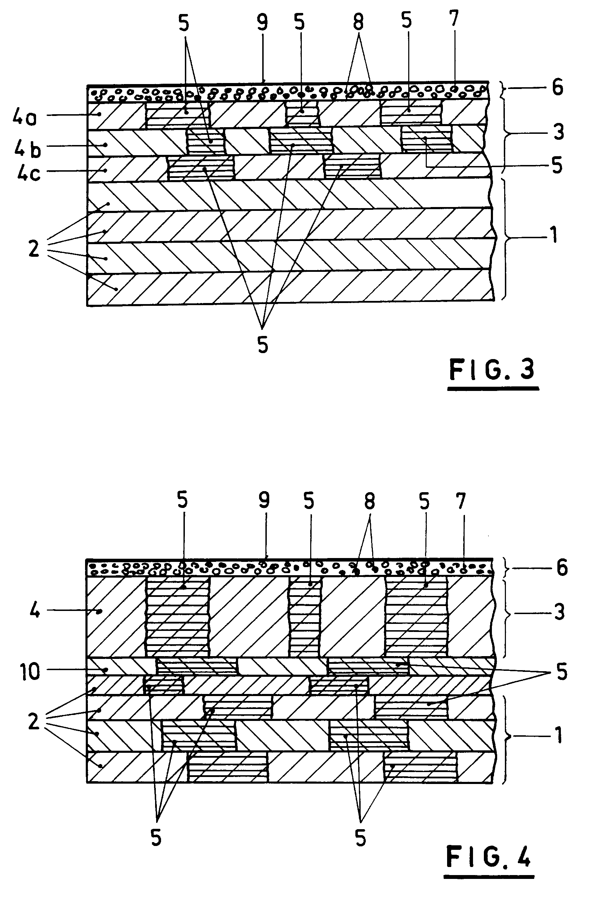

Die Ausführungsform nach Fig. 3 unterscheidet sich von der Ausführung nach Fig. 2 nur dadurch, daß die dekorative Dekorschicht 3 aus mehreren, beispielsweise drei Dekorpapierlagen 4a, 4b und 4c besteht, die jeweils die durchgehenden Farbzonen 5 aufweisen, die nicht deckungsgleich sein müssen.

In Fig. 4 ist dargestellt, daß zwischen der dekorativen Deckschicht 3 aus melaminharzgetränktem Dekorpapier 4 und dem Kern 1 eine zusätzliche Dekorschicht 10 aus phenolharzgetränktem Dekorpapier angeordnet ist, das ebenso wie das Dekorpapier 4 über die gesamte Papierdicke durchgehende Farbzonen 5 aufweist, die von der übrigen Papiermasse der Dekorschicht 10 farblich abgesetzt sind.

Zweckmäßigerweise geben diese Farbzonen 5 ebenfalls mindestens angenähert das Farbmuster der dekorativen Deckschicht 3 wieder. Der ganze Kern 1 kann auch aus phenolharzgetränktem Dekorpapier aufgebaut sein.

In der Dekorschicht 3 und ggf. der Dekorschicht 10 und/oder im Kern 1 können abwechselnd melaminharzgetränkte und phenolharzgetränkte Papiere angeordnet sein. Diese Anordnung schließt ein Verziehen der Schichtpreßstoffplatte aus.

Fig. 4 zeigt außerdem, daß sich auch durch die Schichten des Kerns 1 abgesetzte Farbzonen 5 erstrecken können.

Allen dargestellten Ausführungsbeispielen einer dekorativen Hochdruck-Schichtpreßstoffplatte ist gemeinsam, daß das dekorative Farbmuster erhalten bleibt, auch wenn ein mechanischer Verschleiß so weit fortgeschritten ist, daß er sich fast bis zur Unterseite der dekorativen Deckschicht 3 bzw. der Dekorschicht 10 erstreckt.

## Patentansprüche

1. Dekorative Hochdruck-Schichtpreßstoffplatte mit einer dekorativen Deckschicht (3) aus mindestens einem melaminharzgetränkten, farblich gemusterten Dekorpapier (4) und mit einem Kern (1) aus mehreren Lagen von phenolharzgetränkten Kernpapieren (2), dadurch gekennzeichnet, daß das Dekorpapier (4) über die gesamte Papierdicke durchgehende, von der übrigen Papiermasse des Dekorpapiers (4) farblich abgesetzte Farbzonen (5) aufweist, die das Farbmuster des Dekorpapiers (4) bilden.

2. Dekorative Hochdruck-Schichtpreßstoffplatte nach Anspruch 1, dadurch gekennzeichnet, daß die dekorative Deckschicht (3) an ihrer Außenseite eine hochabriebfeste Oberlayschicht (6) trägt.

3. Dekorative Hochdruck-Schichtpreßstoffplatte nach Anspruch 2, dadurch gekennzeichnet, daß die Overlayschicht (6) aus einem durchscheinenden, harzgetränktem Papier (7) mit abriebverzögernden Zusätzen (8) besteht.

4. Dekorative Hochdruck-Schichtpreßstoffplatte nach Anspruch 1, dadurch gekennzeichnet, daß die dekorative Deckschicht (3) aus mehreren Lagen von Dekorpapier (4a, 4b, 4c) mit jeweils durchgehenden Farbzonen (5) besteht.

5. Dekorative Hochdruck-Schichtpreßstoffplatte nach Anspruch 1, dadurch gekennzeichnet, daß zwischen der dekorativen Deckschicht (3) aus melaminharzgetränktem Dekorpapier (4) und dem Kern (1) eine Dekorschicht (10) aus mindestens einem phenolharzgetränkten Dekorpapier angeordnet ist, das über die gesamte Papierdicke durchgehende, von der übrigen Papiermasse des Dekorpapiers farblich abgesetzte Farbzonen (5) aufweist, die mindestens angenähert das Farbmuster der dekorativen Deckschicht (3) wiedergeben.

6. Dekorative Hochdruck-Schichtpreßstoffplatte nach Anspruch 5, dadurch gekennzeichnet, daß der gesamte Kern (1) aus phenolharzgetränktem Dekorpapier besteht.

7. Dekorative Hochdruck-Schichtpreßstoffplatte nach Anspruch 1, dadurch gekennzeichnet, daß in der Dekorschicht (3) und/oder dem Kern (1) abwechselnd melaminharzgetränkte und phenolharzgetränkte Papiere angeordnet sind.

8. Dekorative Hochdruck-Schichtpreßstoffplatte nach Anspruch 1 oder 2, dadurch gekennzeichnet, daß die Deckschicht (3) bzw. die Overlayschicht (6) eine äußere Haftschicht (9) aus Polyvinylbutyral aufweist.
